# EUROPÄISCHE PATENTSCHRIFT

(11) **EP 1 327 234 B1**
(45) Veröffentlichungstag und Bekanntmachung des Hinweises auf die Patenterteilung: **21.04.2004**
(21) Anmeldenummer: 01987934.5
(22) Anmeldetag: 12.10.2001
(51) Int. Cl.: G08G 1/127

(54) **VERFAHREN FÜR EIN AKTIVES TRANSPORTMANAGEMENT AUF CELL-BROADCAST-BASIS**
METHOD FOR ACTIVE TRANSPORTATION MANAGEMENT BASED ON CELL BROADCAST
PROCEDE DE GESTION ACTIVE DE TRANSPORT SUR LA BASE DE LA DIFFUSION CELLULAIRE

(30) Priorität: 18.10.2000 DE 10051810
(43) Veröffentlichungstag der Anmeldung: 16.07.2003
(73) Patentinhaber: T-Mobile Deutschland GmbH, 53227 Bonn (DE)
(72) Erfinder: HAGER, Rolf, 53424 Remagen-Oedingen (DE)
(74) Vertreter: Riebling, Peter, Dr.-Ing.
(86) Internationale Anmeldenummer: PCT/DE2001/003886
(87) Internationale Veröffentlichungsnummer: WO 2002/033674

(56) Entgegenhaltungen:
- EP-A- 1 006 747
- WO-A-00/60842
- WO-A-89/03106
- DE-A- 19 716 029
- FR-A- 2 674 355

## Beschreibung

Die Erfindung betrifft ein Verfahren für ein aktives Transportmanagement auf Cell-Broadcast-Basis nach dem Oberbegriff des Patentanspruchs 1.

Bisher gibt es eine Vielzahl von sogenannten Transport- oder Ftottenmanagement-Systemen. Diese sind allerdings nicht aktiver Natur, d. h. entweder muss sich der Fahrer zur Vermeidung von Leerfahrten beim Kunden oder Flottenmanager einen neuen Auftrag abholen oder alternativ bekommt er automatisch vom Flottenmanager derselben Firma einen Folgeauftrag übertragen, womit er allerdings zur Flotte gehören muss.

Die WO-A-89/03106 offenbart ein Ortungssystem für Fahrzeuge zur Vergabe von Transportaufträgen an eine Reihe von Fahrzeugen einer Fahrzeugflotte. Die Fahrzeuge werden durch eine Zentrale über Funk über die Art des Transportauftrags verständigt und senden bei Eignung für den Auftrag eine Rückantwort an die Zentrale.
Aus der FR-A-2 674 355 ist ein Transportmanagementsystem für Taxis einer Taxiflotte bekannt geworden, bei dem Transportwünsche von Taxikunden durch eine Zentrale automatisch mit freien Kapazitäten der Taxiflotte abgestimmt werden, wobei die Zentrale über Funk mit der Taxiflotte kommuniziert.
Die DE-A-197 16 029 offenbart ein Verfahren zur Vergabe von Aufträgen an mobile Dienstleister eines Dienstleistungsunternehmens, wobei ein in einer Zentrale vorgesehener Sender über Funk mit einer Vielzahl von mobilen Empfängern verbunden ist. Vom Sender werden Daten ausgestrahlt, die Informationen über einen Auftragsort enthalten. In jedem der mobilen Empfänger wird dessen aktueller Standort ermittelt. Mobile Empfänger, deren aktueller Standort sich in einem vorgegebenen Aktivierungsbereich um den Auftragsort befinden, senden jeweils ein Meldesignal an den Sender zurück. Die Auftragsvergabe erfolgt an einen der ein Meldesignal zurücksendenden Empfänger.
Die oben beschriebenen Verfahren aus dem Stand der Technik sind nur für Fahrzeuge einer definierten Fahrzeugflotte innerhalb eines Dienstleistungsuntemehmens geeignet. Die Ressourcen eines öffentlichen zellufaren digitalen Mobilkommunikationssystems werden nicht verwendet.

Die EP-A-1 006 747 offenbart ein Verfahren zur Identifizierung von mobilen Stationen, die an mindestens einem vorgegebenen Dienst teilnehmen, sich in einem vorgegebenen geographischen Gebiet befinden und mindestens eine vorgegebene Eigenschaft aufweisen. Bei diesem Verfahren werden zunächst zentral bei einem Diensteanbieter sämtliche an dem vorgegebenen Dienst teilnehmenden mobilen Stationen innerhalb des vorgegebenen geographischen Gebiets über ein Mobiltelekommunikationssystem ermittelt. Danach wird durch den Diensteanbieter für jede der ermittelten mobilen Stationen geprüft, ob sie die mindestens eine vorgegebene Eigenschaft aufweist. Schließlich werden diejenigen mobilen Stationen signalisiert, die alle die genannten Bedingungen und Eigenschaften erfüllen.
Dieses Verfahren eignet sich nicht für ein Transportmanagement im Sinne der vorliegenden Erfindung, da eine Überprüfung und eine Auswahl von in Frage kommenden Transportfahrzeugen durch den notwendigen Datenaustausch zu einer unzumutbaren Belastung des Mobiltelekommunikationsnetzes und der Zentrale führen würde.

Die Aufgabe der Erfindung besteht darin, ein Verfahren für ein aktives Transportmanagement vorzuschlagen, mit dem allen infrage kommenden Fahrzeugen, unabhängig von irgendeiner Flotten- oder Firmenzugehörigkeit, ein Transportauftrag angeboten werden kann.

Die Lösung dieser Aufgabe beruht auf den Merkmalen des Patentanspruchs 1. Erfindungsgemäß ist mindestens eine Transportzentrale eingerichtet, welche potentielle Transportaufträge von Kunden mit Angabe der Transportdaten und - parameter empfängt und die den Transportaufträgen zugeordneten Transportdaten und -parameter in eine elektronische Nachricht konvertiert, welche mittels eines Mobilkommunikationssystems in einem vorgegebenen Gebiet ausgestrahlt wird und von geeigneten Empfangsvorrichtungen empfangen werden kann. Zur Durchführung des Verfahrens wird ein digitales zellulares Mobilkommunikationssystem eingesetzt. Somit ist es leicht möglich, ein Gebiet für die Aussendung der Nachricht zu definieren, wobei das Gebiet die Fläche einer oder mehrerer Funkzellen des Mobilkommunikationssystems umfasst. Die elektronische Nachricht wird erfindungsgemäß als Kurznachricht codiert, die per Cell Broadcast in den vorher bestimmten Funkzellen des Gebietes ausgesendet wird.

Das Prinzip ist dem einer Taxizentrale vergleichbar: viele im vorgegebenen Gebiet befindliche Fahrzeuge lauschen dem Transportangebot, der erste geeignete Kandidat hat zeitlich die beste Chance, den Auftrag zu bekommen.

Vorteilhafte Weiterbildungen und Ausgestaltungen der Erfindung sind in den abhängigen Patentansprüchen angegeben.

Der Abholort befindet sich innerhalb des vorgegebenen Gebietes, vorzugsweise etwa im Zentrum des Gebietes, in weichem die Nachricht ausgestrahlt wird.

Die ausgesandte, einen potentiellen Transportauftrag enthaltende Nachricht kann nun von geeigneten Empfangsvorrichtungen von sich innerhalb des Gebietes befindlichen Fahrzeugen empfangen werden, wobei bei Interesse des Fahrzeugführers eine Annahme des Transportauftrages durch Verbindungsaufnahme mit der Transportzentrale erfolgen kann. Die Verbindungsaufnahme kann über das Mobilkommunikationsnetz oder auf anderem geeigneten Weg erfolgen.

In einer Weiterentwicklung des Erfindungsgedankens ist vorgesehen, dass die im Fahrzeuge vorgesehene Empfangseinrichtung eingehende Transportaufträge automatisch empfängt, auswertet und bei Eignung des Transportauftrags diesen durch einen Verbindungsaufbau mit der Transportzentrale annimmt.

Die automatische Auswertung auf Eignung der eingehenden Transportaufträge erfolgt anhand der übermittelten Transportdaten und -parameter, indem diese mit vom Führer des Fahrzeugs vorgebbaren oder bereits vorgegebenen Daten und Parametern verglichen werden.

Die Transportdaten und -parameter umfassen vorzugsweise eine genaue Beschreibung der Ladung, den Abholort, den Zielort, wichtige Transporttermine, und Angaben zur Vergütung.

Nachdem vom Fahrzeug bew. dem Fahrzeugführer Interesse am Transportauftrag bekundet wurde, sendet die Transportzentrate eine Auftragsbestätigung an das ausgewählte Fahrzeug, welches mit dem Transport beauftragt wird.

Nach Auftragsvergabe können weitere Vertragsmodalitäten zwischen Transportzentrale und dem Führer des Fahrzeugs verhandelt werden.

Ein Ausführungsbeispiel der Erfindung wird nachfolgend anhand der Zeichnungsfigur 1 näher erläutert, wobei sich weitere Merkmale und Vorteile der Erfindung ergeben.

Die Erfindung gestattet einer Transportzentrale 1, Transportaufträge an eine Reihe von möglicherweise interessierten Transportfahrzeugen 7 ,8 zu übermitteln.

Die Transportzentrale 1 ist für ein vorgegebenes Gebiet 2, hier z.B. die gesamte Bundesrepublik Deutschland, zuständig und ist an mindestens ein das Gebiet 2 abdeckendes digitales, zellulares Mobilkommunikationssystem angebunden, welches eine Vielzahl von Funkzellen 3, 4 umfasst.

In der Transportzentrale 1 laufen Transportwünsche und -aufträge von Kunden zusammen, wobei jeder Transportauftrag durch Daten und notwendige Parameter des Transports charakterisiert ist. Diese Parameter können sein:
- Angabe zur Ladung mit Beschreibung (Gewicht, Volumen, Form, Gefahrenklasse etc.);
- Angabe des Abholorts 9, an dem die Ladung übernommen werden kann;
- Angabe des Zielorts 11, an den die Ladung geliefert werden soll;
- Den Zeitraum Y bis Z (etwa Y: = yymmdd, hh:mm, z. B. 000310,13:00 für Start Tag und -Zeit), in dem der Transport erfolgen soll;
- ggfs. Telefonnummer bzw. Adresse der Zentrale1, falls ID der Zentrale oder des korrespondierenden CB-Kanals vorher nicht eindeutig abgesprochen war.

Die oben genannten Parameter des Transportauftrags werden in der Transportzentrale auf geeignete Weise konvertiert und in eine herkömmliche Kurznachricht (SMS) eingebunden, wie sie in digitalen Mobilfunknetzen versandt werden kann. Diese Kurznachricht 12 wird im Mobilkommunikationsnetz von einer Kurznachrichtenzentrale 10 via Cell Broadcast (SMS-CB) 12 innerhalb eines begrenzten, im wesentlichen durch den betreffenden Abholort bestimmten Gebiets 5 ausgesendet. Vorteilhaft kann dies dadurch erfolgen, dass die SMS Nachricht 12 an die Menge aller im Gebiet 5 befindlichen, d.h. geeigneten, Funkzellen 4 per Broadcast übertragen wird. Eine Funkzelle 4 ist geeignet, wenn sie teilweise oder vollständig innerhalb eines Radius 6 um den Abholort 9 liegt, welcher Radius 6 das Gebiet 5 definiert.

Die Auswahl der geeigneten Funkzellen 4 innerhalb des Gebiets 5 erfolgt entweder direkt in der Transportzentrale 1, in einem dedizierten Server oder direkt im Cell Broadcast Center 10 (CBC). Das Gebiet 5 zur Auswahl von Funkzellen muss nicht kreisförmig mit Radius 6 sein, sondem kann beliebige Formen haben (Rechteck, Polygon etc.). Das Gebiet 5 kann ebenfalls später per User Interface frei auswählbar gemacht werden.

Die ausgesendete SMS-Nachricht 12 kann innerhalb des Gebietes 5 von interessierten Transportfahrzeugen 7, 8 empfangen werden. Hierzu müssen die Transportfahrzeuge 7, 8 mit einer geeigneten Empfangseinrichtung, z.B. einem Mobilfunkendgerät, ausgerüstet sein. Interessierte Transportfahrzeuge 7, 8 sind solche, die sich in einem sinnvollen Anfahrtsradius innerhalb des Gebiets 5 befinden. Daher sind andere Transportfahrzeuge ausgeschlossen, deren Anfahrtsweg bzw. - dauer für den erwünschten Transport zu groß ist bzw. die sich außerhalb des Gebietes 5 befinden, da diese Fahrzeuge zu weit weg sind, um den Auftrag überhaupt annehmen zu können.

Aufgrund der empfangenen Nachricht 12 erhalten die Fahrer bzw. Fahrzeugmanager der Transportfahrzeuge 7, 8 einen potentiellen Transportauftrag, der genügend Information beinhaltet, um beurteilen zu können, ob der Transport technisch überhaupt für das geführte Fahrzeug 7, 8 infrage kommt. Z. B. könnte Ladungsmenge (Volumen, Gewicht) zu groß sein, dann kommt Fahrzeug nicht infrage.

Kommt der Transport infrage, so meldet sich der Fahrer bzw. Fahrzeugmanager bei der Transportzentrale 1 und handelt sämtliche notwendigen Bedingungen aus, z. B. Honorar, Qüell- und Ziel-Adressen, sonstige Informationen etc.

Eine Weiterbildung der Erfindung sieht vor, dass das SMS-CB-fähige Endgerät des Fahrers (z. B. Laptop mit GSM- oder M20-Modul o. ä.) eine Online-Applikation mit Auswertelogik beinhaltet, die die entsprechenden eingegangenen Kurznachrichten 12 automatisch auswerten und darauf reagieren kann.

Die Auswertelogik besteht aus einem Regelwerk, das durch den Fahrer ggfs, konfiguriert werden kann und anhand der in der Kurznachricht übermittelten Daten und Parameter beispielsweise Entscheidungen folgender Art trifft:
- "Ladung geeignet" => Annahmeangebot automatisch per SMS an Zentrale schicken;
- "Ladung geeignet" => Annahmeangebot automatisch per SMS an Zentrale schicken mit anschließendem automatischen Verbindungsaufbau zur Zentrale;
- "Ladung geeignet" und Zeitfenster passt in Tagesplan => Annahmeangebot an Zentrale schicken;
- "Ladung nicht geeignet" oder "nicht interessiert" (kann per User Interface als Flag in die Auswertelogik eingebunden sein) => keine Reaktion und damit Ablehnung des Angebotes.

Die Reaktion der Applikation besteht also aus mehreren konfigurierbaren Möglichkeiten, die in beliebiger Gruppierung auftreten können:
- Schicken (sofort oder später) einer Angebotsannahme-SMS an die Zentrale 1 (auch die Zentrale 1 kann automatisch und online den Auftrag vergeben, etwa nach FIFO-Prinzip oder eigenen Regeln);
- automatischen Anruf an die Zentrale 1 starten (entweder sofort oder später);
- Signalisierung des Vorganges mit Interaktionsmöglichkeit per User Interface an den Benutzer.

Sobald von der Zentrale 1 die definitive Auftragsvergabe erfolgt, z.B. per direkter SMS an das Endgerät im Fahrzeug oder wahlweise per automatischem / manuellem Voice Call, dann bestätigt die Applikation des Fahrers über o. g. Reaktionsmöglichkeiten und der Vertrag gilt als geschlossen.

Die genauen Vertragsmodalitäten, inkl. Lieferadresse, Lohn etc., können per SMS durch die Applikation empfangen und für den Fahrer aufbereitet werden. Hier sind ggfs. weitere Möglichkeiten bzw. Parameter für die Auswertelogik gegeben, z. B. könnte der Lohn der Arbeit ein Ausschlusskriterium für die Auftragannahme sein. Insgesamt kann das hier beschriebene gesamte Verfahren komplett automatisiert werden und zusätzlich optional interaktiv mit Benutzeranteilen ausgestattet werden.

### Zeichnungslegende

- 1: Transportzentrale
- 2: Gebiet
- 3: Funkzelle
- 4: Funkzelle
- 5: Gebiet
- 6: Radius
- 7: Fahrzeug
- 8: Fahrzeug
- 9: Abholort
- 10: Cell Broadcast Zentrale (CBC)
- 11: Zielort
- 12: Nachricht

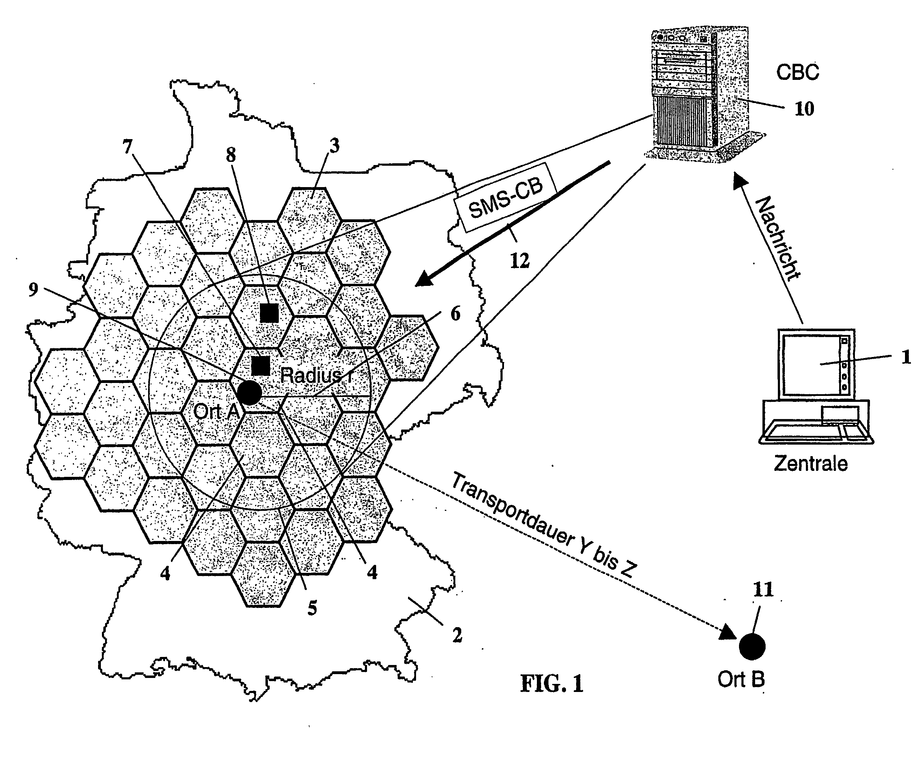

## Patentansprüche

1. Verfahren für ein aktives Transportmanagement, wobei
eine Transportzentrale (1) eingerichtet ist, welche potentielle Transportaufträge von Kunden unter Angabe von Transportdaten und -parametern empfängt,
dass die Transportzentrale (1) die den Transportaufträgen zugeordneten Transportdaten und -parameter in eine elektronische Nachricht (12) konvertiert, welche mittels eines Mobilkommunikationssystems in einem vorgegebenen Gebiet (5) ausgestrahlt wird und dort von geeigneten Empfangsvorrichtungen empfangen werden kann,
**dadurch gekennzeichnet, dass** das Mobilkommunikationssystem ein digitales zellulares Mobilkommunikationssystem ist,
dass das vorgegebene Gebiet (5) die Fläche einer oder mehrerer Funkzellen (3; 4) des Mobilkommunikationssystems umfasst, und
dass die elektronische Nachricht (12) eine Kurznachricht ist, die per Cell Broadcast ausgesendet wird.

2. Verfahren nach Anspruch 1, **dadurch gekennzeichnet, dass** sich der Abholort (9) innerhalb des vorgegebenen Gebietes (5) befindet, in welchem die Nachricht (12) ausgestrahlt wird.

3. Verfahren nach einem der vorhergehenden Ansprüche, **dadurch gekennzeichnet, dass** die elektronische Nachricht (12) eine Sprachnachricht ist, die per Cell Broadcast ausgesendet wird.

4. Verfahren nach einem der vorhergehenden Ansprüche, **dadurch gekennzeichnet, dass** die Nachricht (12) über einen Transportauftrag von geeigneten Empfangsvorrichtungen von sich innerhalb des Gebietes (5) befindlichen Fahrzeugen (7, 8) empfangen werden kann, wobei eine Annahme des Transportauftrages durch Verbindungsaufnahme mit der Transportzentrale (1) erfolgt.

5. Verfahren nach einem der vorhergehenden Ansprüche, **dadurch gekennzeichnet, dass** die im Fahrzeug (7, 8) vorgesehene Empfangseinrichtung die ausgesendeten Transportaufträge (12) automatisch empfängt, auswertet und bei Eignung des Transportauftrags diesen durch einen Verbindungsaufbau mit der Transportzentrale (1) annimmt.

6. Verfahren nach einem der vorhergehenden Ansprüche, **dadurch gekennzeichnet, dass** die Auswertung auf Eignung der eingehenden Transportaufträge anhand der übermittelten Transportdaten und -parameter erfolgt, indem diese mit vom Führer des Fahrzeugs (7, 8) vorgebbaren Daten und Parametern verglichen werden.

7. Verfahren nach einem der vorhergehenden Ansprüche, **dadurch gekennzeichnet, dass** die Transportdaten und -parameter umfassen vorzugsweise: eine genaue Beschreibung der Ladung, den Abholort, den Zielort, wichtige Transporttermine, und Angaben zur Vergütung.

8. Verfahren nach einem der vorhergehenden Ansprüche, **dadurch gekennzeichnet, dass** die Transportzentrale (1) eine Auftragsbestätigung an das für den Auftrag ausgewählte Fahrzeug (7, 9) sendet.

9. Verfahren nach einem der vorhergehenden Ansprüche, **dadurch gekennzeichnet, dass** nach Auftragsvergabe weitere Vertragsmodalitäten zwischen Transportzentrale (1) und dem Führer des Fahrzeugs (7, 8) verhandelt werden.

## Claims

1. Method for active transportation management, wherein a transport centre (1) is set up, which receives potential transport orders from customers giving details of transport data and parameters, that the transport centre (1) converts the transport data and parameters assigned to the transport orders into an electronic message (12), which is broadcast by means of a mobile communication system in a preset area (5) and can be received there by suitable receiving equipment, **characterised by** the fact that the mobile communication system is a digital cellular mobile communication system, that the preset area (5) includes the area of one or several radio cells (3; 4) of the mobile communication equipment and that the electronic message (12) is a short message which is sent out by cell broadcast.

2. Method according to claim 1, **characterised by** the fact that the collection location (9) is within the preset area (5), in which the message (12) is broadcast.

3. Method according to one of the previous claims, **characterised by** the fact that the electronic message (12) 5 a speech message, which is sent out by cell broadcast.

4. Method according to one of the previous claims, **characterised by** the fact that the message (12) about a transport order can be received by suitable receiving equipment by vehicles (7, 8) within the area (5), in which acceptance of the transport order is made by contacting the transport centre (1).

5. Method according to one of the previous claims, **characterised by** the fact that the receiving equipment provided in the vehicle (7, 8) automatically receives and evaluates the transport orders sent out (12) and if the transport order is suitable, accepts it by contacting the transport centre (1).

6. Method according to the previous claims, **characterised by** the fact that evaluation of the suitability of incoming transport orders is made using the transport data and parameters sent, in which these are compared with the data and parameters which may be preset by the driver of the vehicle (7, 8).

7. Method according to one of the previous claims, **characterised by** the fact that the transport data and parameters comprise preferably: a precise description of the bad, collection location, destination, important transport deadlines and details of remuneration.

8. Method according to one of the previous claims, **characterised by** the fact that the transport centre (1) sends an order confirmation to the vehicle selected for the order (7, 9).

9. Method according to one of the previous claims, **characterised by** the fact that after the order 5 placed further details of the contract are negotiated between the transport centre (1) and the driver of the vehicle (7, 8).

## Revendications

1. Procédé de gestion active de transports, en ce que l'on établit une centrale de transport (1) qui reçoit de clients des missions potentielles de transport avec indication de données et de paramètres de transport, en ce que la centrale de transport (1) convertit les données et paramètres de transport associés aux missions de transport en un message électronique (12) qui est émis au moyen d'un système de radiocommunication mobile dans un domaine (5) prédéterminé où il peut être reçu par des dispositifs de réception appropriés, **caractérisé en ce que**
le système de radiocommunication mobile est un système de radiocommunication mobile, numérique cellulaire,
**en ce que** le domaine (5) prédéterminé comprend la superficie d'une ou de plusieurs cellules radio (3; 4) du système de radiocommunication mobile et
**en ce que** le message électronique (12) est un message court qui est émis par diffusion sur la ou les cellules.

2. Procédé selon la revendication 1, **caractérisé** en ce quele site d'enlèvement (9) se trouve à l'intérieur du domaine (5) prédéterminé dans lequel le message (12) a été émis.

3. Procédé selon l'une des revendications précédentes, **caractérisé en ce que** le message électronique (12) est un message vocal qui est émis par diffusion sur la ou les cellules.

4. Procédé selon l'une des revendications précédentes, **caractérisé en ce que** le message (12) qui concerne une mission de transport peut être reçu par des dispositifs de réception appropriés de véhicules (7, 8) situés à l'intérieur du domaine (5), l'acceptation de la mission de transport s'effectuant par liaison avec la centrale de transport (1 ).

5. Procédé selon l'une des revendications précédentes, **caractérisé en ce que** le dispositif de réception prévu dans le véhicule (7, 8) reçoit automatiquement les missions de transport (12) émises, les évalue et, lorsque la mission de transport convient, accepte cette dernière par l'intermédiaire de l'établissement d'une liaison avec la centrale de transport (1 ).

6. Procédé selon l'une des revendications précédentes, **caractérisé en ce que** l'évaluation que les missions de transport entrantes conviennent s'effectue à l'aide des données et paramètres de transport transmis en comparant ces derniers à des données et paramètres qui peuvent être prédétermines par le conducteur du véhicule (7, 8).

7. Procédé selon l'une des revendications précédentes, **caractérisé en ce que** les données et paramètres de transport comprennent de préférence: une description précise du chargement, du site d'enlèvement, du site de destination, des délais de transport importants et des données de facturation.

8. Procédé selon l'une des revendications précédentes, **caractérisé en ce que** la centrale de transport (1) envoie une confirmation de mission au véhicule (7, 9) sélectionné pour la mission.

9. Procédé selon l'une des revendications précédentes, **caractérisé en ce qu'**après que la mission a été confiée, d'autres modalités contractuelles sont traitées entre la centrale de transport (1) et le conducteur du véhicule (7, 8).
